# EUROPEAN PATENT SPECIFICATION

(11) **EP 3 137 791 B1**
(45) Date of publication and mention of the grant of the patent: **22.08.2018**
(21) Application number: 14790416.3
(22) Date of filing: 02.10.2014
(51) Int. Cl.: F16H 7/12

(54) **ORBITAL TENSIONER**
ORBITALE SPANNVORRICHTUNG
TENDEUR ORBITAL

(30) Priority: 28.04.2014 US 201414263853
(43) Date of publication of application: 08.03.2017
(73) Proprietor: Gates Corporation, Denver, CO 80202 (US)
(72) Inventor: HARVEY, John, Novi, Michigan 48377 (US); STEGELMANN, Oliver, Strathroy, Ontario N7G 2C8 (CA); MARTINEZ, Arnaud, 6361 JB Nuth (NL); DILTHEY, Jochen, 52074 Aachen (DE); HAENBEUKERS, Casper, NL-6372 XX Landgraag (NL)
(74) Representative: Tunstall, Christopher Stephen
(86) International application number: PCT/US2014/058870
(87) International publication number: WO 2015/167602

(56) References cited:
- EP-A1- 2 385 272
- EP-B1- 2 128 489
- DE-A1-102011 085 122

## Description

### Field of the Invention

The invention relates to a tensioner, and more particularly, to an orbital tensioner having a carrier engaged with a base and revolvable about a first axis, a pivot arm mounted to the carrier, the pivot arm pivotable about a second axis, the second axis orbitally movable about the first axis.

### Background of the Invention

Belt tensioners are used to impart a load on a belt. Typically the belt is used in an engine application for driving various accessories associated with the engine. For example, an air conditioning compressor and alternator are two of the accessories that may be driven by a belt drive system. A belt tensioner may include a pulley journalled to an arm which is pivotable on a base. A spring is connected between the arm and a base. The spring may also engage a damping mechanism. The damping mechanism may include frictional surfaces in contact with each other. The damping mechanism damps an oscillatory movement of the arm caused by operation of the belt drive. This in turn enhances a belt life expectancy and the tensioner life expectancy, by minimizing wear on movable components.

Dual tensioners have been applied to single belt drives which have load reversals, such as starter-generator applications, in order to tension either or both of two spans of the same belt. Since such tensioners work in concert on a single belt, they typically have a single torsion spring. Market demands can include reduction of emissions and increases in fuel economy by lowering the weight of the automobile and reducing the number of under-the-hood components. An approach taken toward these goals involves combining the function of the starter motor and the function of the alternator into a single device, a motor/generator or a gen-star. Also toward the goal of increasing fuel economy, the gen-star promotes the use of a feature called "stop-in-idle". This feature is where the engine is allowed to die when it would ordinarily idle, then be restarted when the automobile is expected to resume motion. This feature substantially increases the demands placed upon accessory belt drives. In this type of application the starter/generator is placed in mechanical communication with the crankshaft via the accessory belt drive.

The closes prior art document EP 2128489B1 discloses a belt tensioning device for a belt drive which comprises a driving machine with a driving belt pulley drivable by a driveshaft around a driving axis, and a plurality of further belt pulleys, and with an infinite belt which is wrapped around the driving belt pulley and the further belt pulleys, wherein the belt tensioning device comprises a housing in which two tensioning arms are supported so as to be pivotable around a common pivot axis, in which tensioning arms there are supported tensioning rollers with axes of rotation extending parallel to the driving axis, wherein the tensioning arms are supported relative to one another by spring means, wherein the housing can be mounted, in presence of the driving belt pulley being mounted at the driving machine, in that the housing is contact-free relative to the driving machine in an annular region surrounding the driveshaft of the driving belt pulley,
characterized in that the pivot axis of the tensioning arms is arranged inside the diameter of the driving belt pulley.

EP 2 385 272 A1 discloses a clamp and endless drive assembly. The assembly has an endless drive which is guided around an endless drive wheel, a starter-generator and a clamping fixture which has two clamping arms. The first clamping arm is hinged to the second clamping arm around a pivot axis that is spaced from another pivot axis about which the first clamping arm can rotate.

What is needed is an orbital tensioner having a carrier engaged with a base and revolvable about a first axis, a pivot arm mounted to the carrier, the pivot arm pivotable about a second axis, the second axis orbitally movable about the first axis. The present invention meets this need.

### Summary of the Invention

The primary aspect of the invention is to provide an orbital tensioner having a carrier engaged with a base and revolvable about a first axis, a pivot arm mounted to the carrier, the pivot arm pivotable about a second axis, the second axis orbitally movable about the first axis.

Other aspects of the invention will be pointed out or made obvious by the following description of the invention and the accompanying drawings.

The present invention provides tensioners as recited in the claims.

### Brief Description of the Drawings

The accompanying drawings, which are incorporated in and form a part of the specification, illustrate preferred embodiments of the present invention, and
together with a description, serve to explain the principles of the invention.
Figure 1 is a front perspective view of a first embodiment.
Figure 2 is a front perspective view of a second embodiment.
Figure 3 is a rear perspective view of the second embodiment.
Figure 4 is a rear perspective view of the first embodiment.
Figure 5 is a rear elevation view of the first embodiment.
Figure 6 is a rear elevation view of the second embodiment.
Figure 7 is a top plan view of the first embodiment.
Figure 8 is a top plan view of the second embodiment.
Figure 9 is a front elevation view of the first embodiment.
Figure 10 is a front elevation view of the second embodiment.
Figure 11 is section 11-11 from Figure 9.
Figure 12 is section 12-12 from Figure 10.
Figure 13 is section 13-13 from Figure 14.
Figure 14 is a side elevation view of the first embodiment.
Figure 15 is section 15-15 from Figure 9.
Figure 16 is section 16-16 from Figure 10.
Figure 17 is a side elevation view of the second embodiment.
Figure 18 is a front perspective exploded view of the first embodiment.
Figure 19 is a front perspective exploded view of the second embodiment.
Figure 20 is a rear perspective exploded view of the second embodiment.
Figure 21 is a rear perspective exploded view of the first embodiment.
Figure 22 is a plan view of an alternate embodiment.
Figure 23 is a cross-sectional view of Figure 22.
Figure 24 is an exploded view of the alternate embodiment in Figure 22.
Figure 25 is a top perspective view of the embodiment in Figure 22.
Figure 26 is a front view of the device on an engine.
Figure 27 is an exploded view of an alternate embodiment.
Figure 28 is an exploded view of an alternate embodiment.

### Detailed Description of the Preferred Embodiment

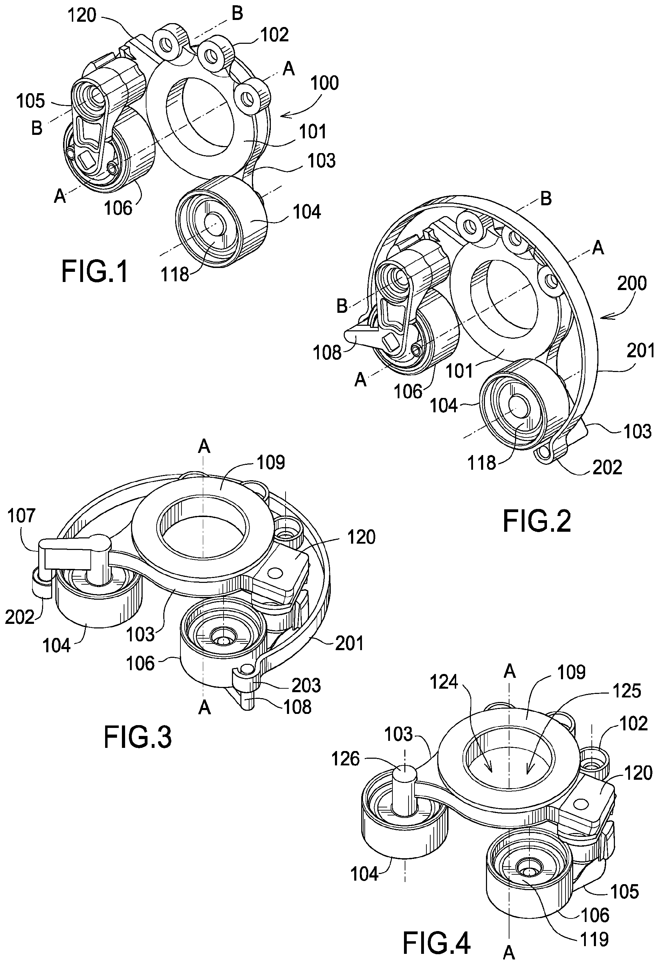

Figure 1 is a front perspective view of a first embodiment. Tensioner 100 comprises a base 101. Base 101 comprises mounting members 102 each of which receive a fastener (not shown). The base can be mounted to a driven accessory on a vehicle engine, such as an alternator or starter-generator.

Carrier 103 is engaged with base 101 to move with a revolving motion about axis A-A. Pulley 104 is journalled to carrier 103 on bearing 118. Pulley 104 may be referred to as an idler pulley. Pulley 104 moves orbitally about axis A-A on member 103. Axis A-A does not engage or intersect any physical portion of the tensioner. Each of base 101 and carrier 103 encircle but do not intersect axis A-A. In particular, carrier 103 comprises hole 124 disposed in a plane when viewed edge-on that is coplanar with section 13-13, and which axis A-A intersects normally. Base 101 comprises hole 125 disposed in a plane when viewed edge-on that is coplanar with section 13-13, and which axis A-A intersects normally. Each of carrier 103 and base 101 encircle but do not intersect axis A-A. Hole 124 and hole 125 are coaxial and parallel.

Pivot arm 105 is pivotably connected to carrier 103 about axis B-B. Pulley 106 is journalled to pivot arm 105 on bearing 119. Axis A-A and axis B-B are parallel and are not coaxial. Pivot arm 105 and axis B-B orbit in a partial arc about axis A-A. Axis B-B is disposed a distance from axis A-A and also orbits with a constant radius (R3) about axis A-A. The range α for an orbital movement of axis B-B about axis A-A can be up to approximately 90 degrees, but is typically less than approximately 50 degrees. Radius (R1) of the rotational axis of pulley 106 to axis A-A is variable given the pivoting action of pivot arm 105 about axis B-B. Radius (R2) of the rotational axis of pulley 104 to axis A-A is constant. The rotational axis of pulley 104 and the rotational axis of pulley 106 are both disposed within an outside diameter (D) of the base, thereby rendering the tensioner very compact.

Figure 2 is a front perspective view of a second embodiment. A second embodiment 200 further comprises a spring 201. Spring 201 comprises less than one full coil, typically limited to between 180 degrees to 270 degrees between end 202 and end 203. Spring 201 is engaged between carrier 103 and pivot arm 105. End 202 engages member 107. End 203 engages member 108. Spring 201 urges pulley 104 toward pulley 106.

Figure 3 is a rear perspective view of the second embodiment. Spring 201 engages member 107 on carrier 103 and member 108 on pivot arm 105. Cover 109 encloses the interior of the tensioner to prevent entry of debris.

Figure 4 is a rear perspective view of the first embodiment. Pulley 104 and pulley 106 engage a belt (not shown), for example on a vehicle engine accessory drive. The belt would be routed from a crankshaft to a driven accessory such as an alternator. Pivot arm 105 is mounted to carrier 103 upon a mounting portion 120.

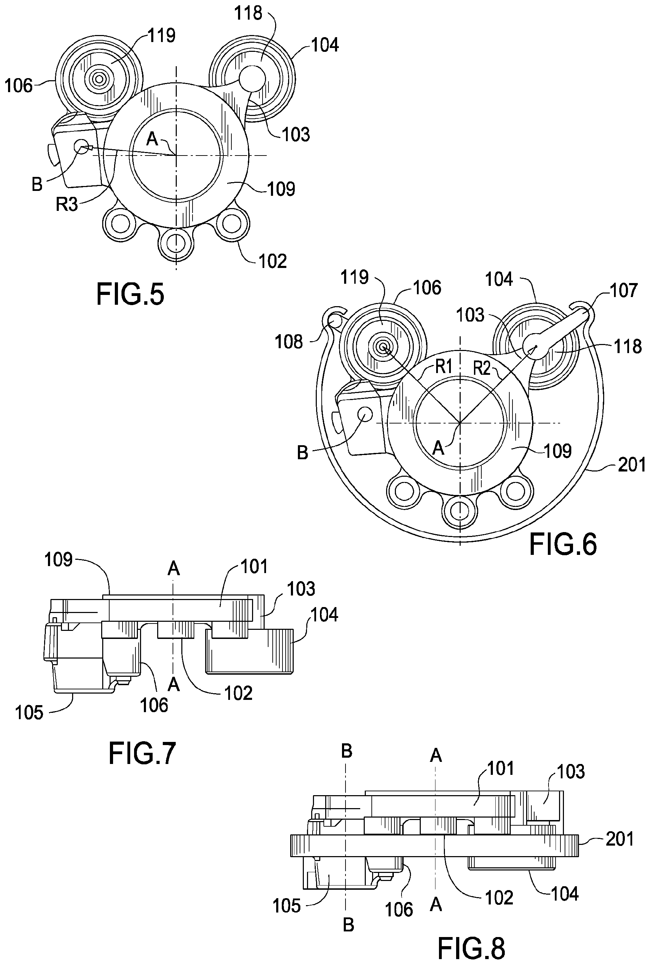

Figure 5 is a rear elevation view of the first embodiment. Axis A-A is parallel and is not coaxial with axis B-B. The clamping force of spring 201 is sufficient to keep it attached to member 107 and member 108.

Figure 6 is a rear elevation view of the second embodiment. Three mounting members 102 provide flexibility for attaching the device to different styles of alternators, for example. Fasteners such as bolts (not shown) can be used.

Figure 7 is a top plan view of the first embodiment.

Figure 8 is a top plan view of the second embodiment.

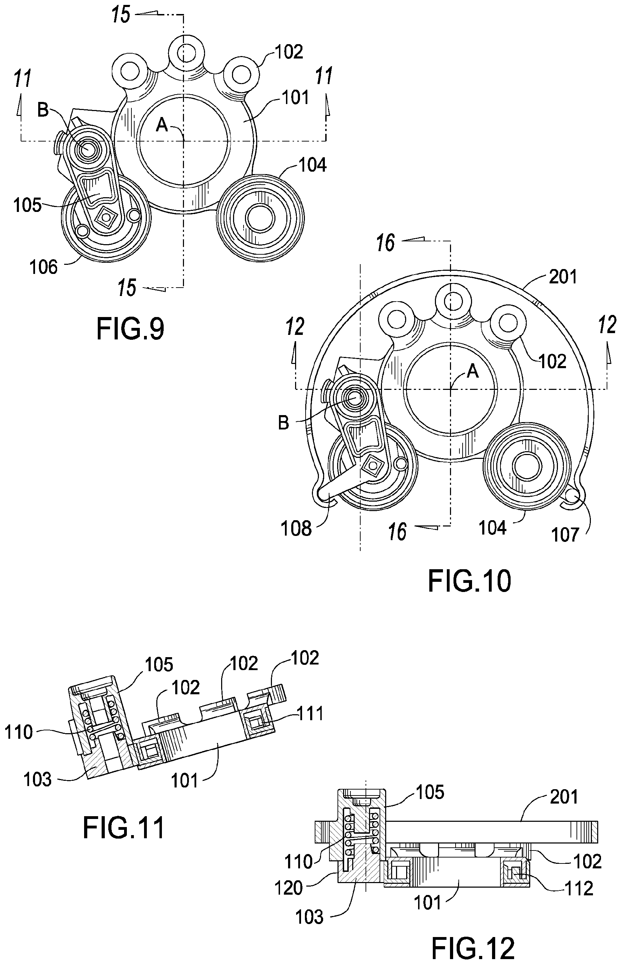

Figure 9 is a front elevation view of the first embodiment.

Figure 10 is a front elevation view of the second embodiment.

Figure 11 is section 11-11 from Figure 9. Torsion spring 110 biases pivot arm 105 and pulley 106 toward pulley 104. The combination of pivot arm 105, pulley 106 and spring 110 may also be referred to as a tensioner.

Damping mechanism 111 is enclosed between base 101 and cover 109. Damping mechanism 111 is disposed between carrier 103 and base 101. Damping mechanism 111 damps an oscillatory movement of carrier 103 by a frictional engagement between the damping mechanism 111 and base 101. Damping mechanism 111 is fixedly attached to carrier 103 at member 112.

Figure 12 is section 12-12 from Figure 10. Damping mechanism 111 is connected to member 112. Member 112 holds damping mechanism 111 in a fixed position relative to carrier 103.

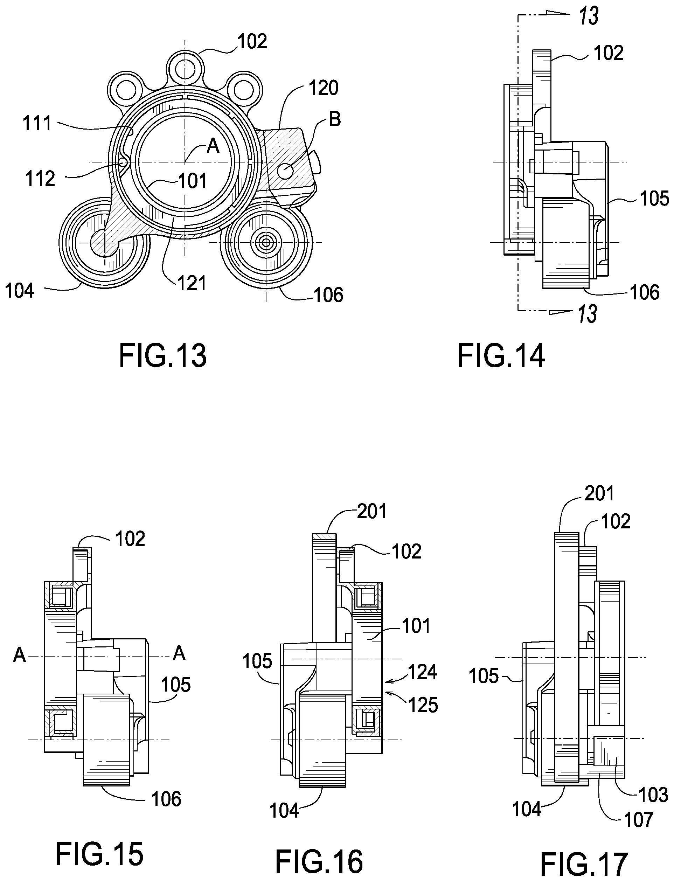

Figure 13 is section 13-13 from Figure 14. Damping mechanism 111 is connected to carrier 103 at mounting member 112. Damping mechanism 111 is contained within annular space 121.

Figure 14 is a side elevation view of the first embodiment.

Figure 15 is section 15-15 from Figure 9.

Figure 16 is section 16-16 from Figure 10.

Figure 17 is a side elevation view of the second embodiment.

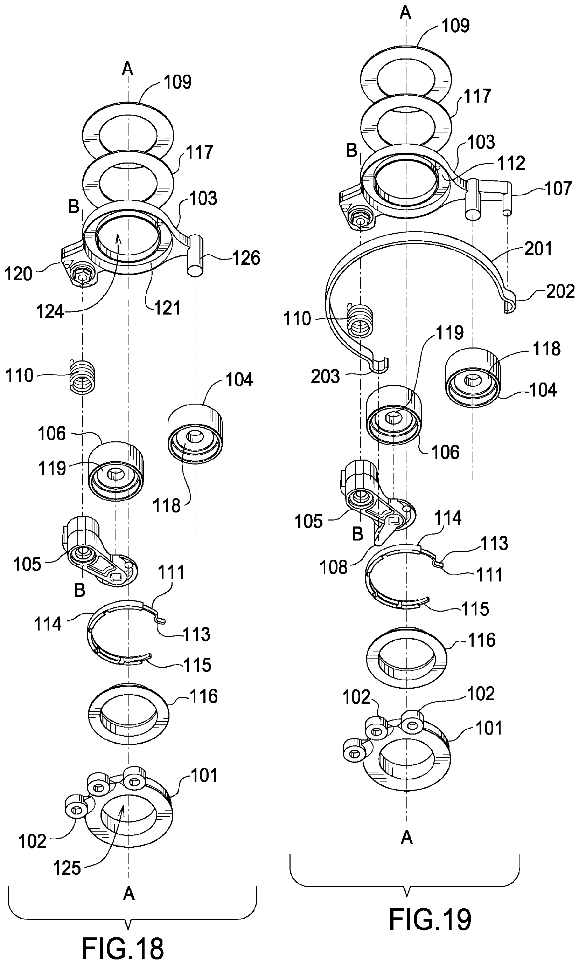

Figure 18 is a front perspective exploded view of the first embodiment. Mounting portion 120 extends radially from carrier 103. The pivot axis of pivot arm 105 is axis B-B. The axis of rotation of carrier 103 is axis A-A. Bearing 118 is mounted to member 126. Member 126 projects from carrier 103.

Figure 19 is a front perspective exploded view of the second embodiment. Damping mechanism 111 comprises a frictional material 114 which is attached to an arcuate spring-loaded body 115. Spring-loaded body 115 presses frictional material 114 radially outward into engagement with surface 112.

Carrier 103 engages bushing 116. Bushing 116 is disposed between carrier 103 and base 101. Bushing 117 is disposed between cover 109 and carrier 103.

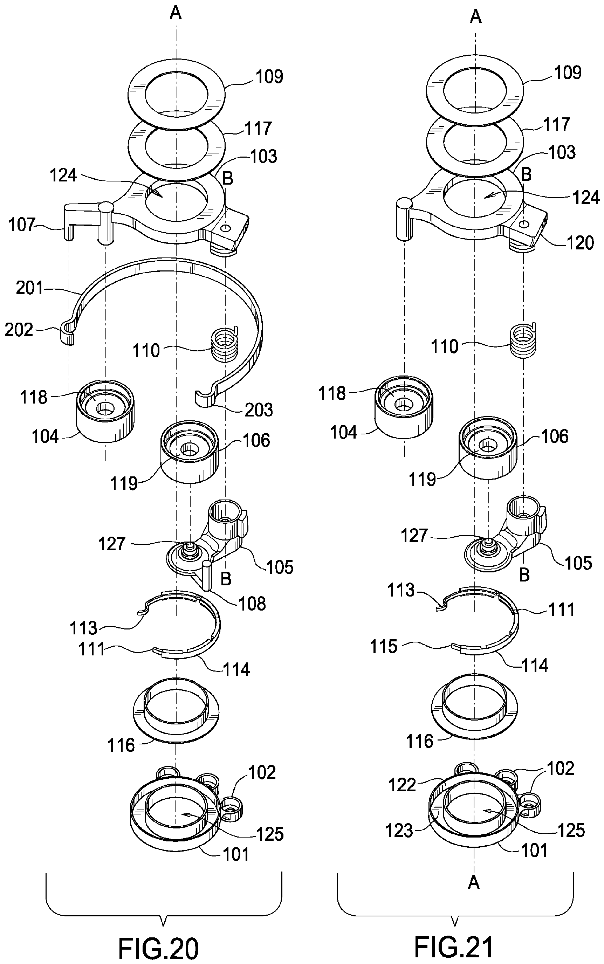

Figure 20 is a rear perspective exploded view of the second embodiment. Bearing 119 is fastened to pivot arm 105 at member 127.

Figure 21 is a rear perspective exploded view of the first embodiment. Frictional material 114 frictionally engages surface 122 of base 101 to damp movement of member 103. Damping mechanism 111 and carrier 103 are each disposed in annular space 123 in base 101.

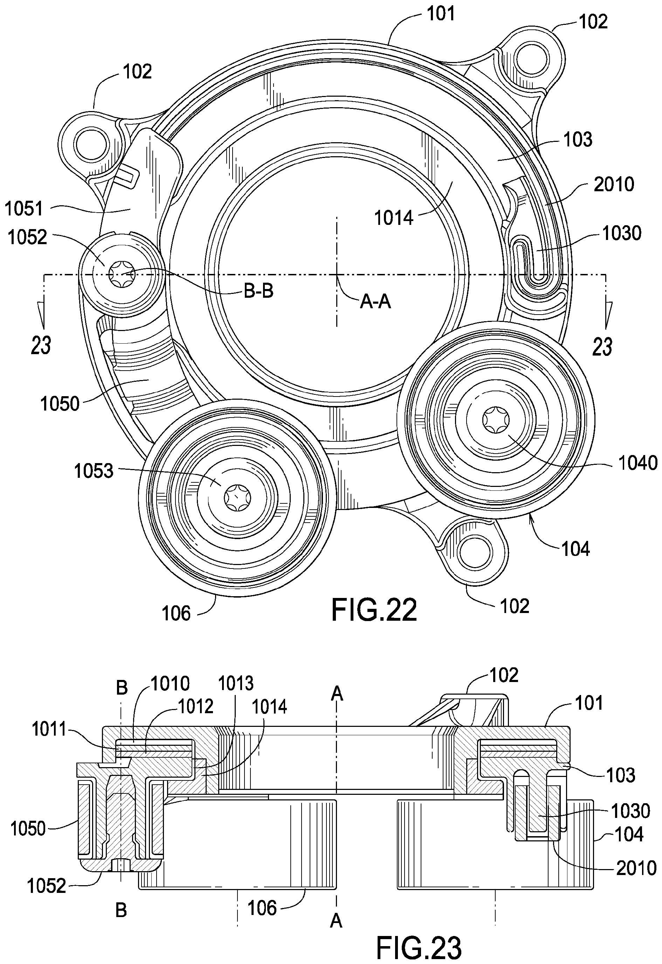

Figure 22 is a plan view of an alternate embodiment. In this embodiment a cantilever pivot arm 1050 is used. Spring 2010 is mounted by end 2011 to the carrier 103 mounting portion 1030. The other end 2012 of spring 2010 engages a cantilever end 1051 of pivot arm 1050. Spring 2019 urges end 1051 radially outward from axis A-A which in turn urges pulley 106 toward pulley 104, thereby loading a belt (not shown). Pivot arm 1050 pivots about bolt 1052. Retaining member 1014 holds carrier 103 in engagement with base 101.

Figure 23 is a cross-sectional view of Figure 22. Disposed between base 101 and carrier 103 is a spring member 1010, thrust member 1011, damping member 1012, bushing 1013 and retaining member 1014. Spring member 1010 comprises a spring washer or Belleville spring. Thrust member 1011 is engaged with base 101 so that it does not rotate with respect to base 101. Tabs 1015 engage slots 1017. Damping member 1012 is engaged with base 101 so that it does not rotate with respect to base 101. Tabs 1015 engage slots 1016.

Damping member 1012 frictionally engages carrier 103 in order to damp movements of carrier 103. Spring member 1010 provides the normal force to press damping member 1012 against carrier 103.

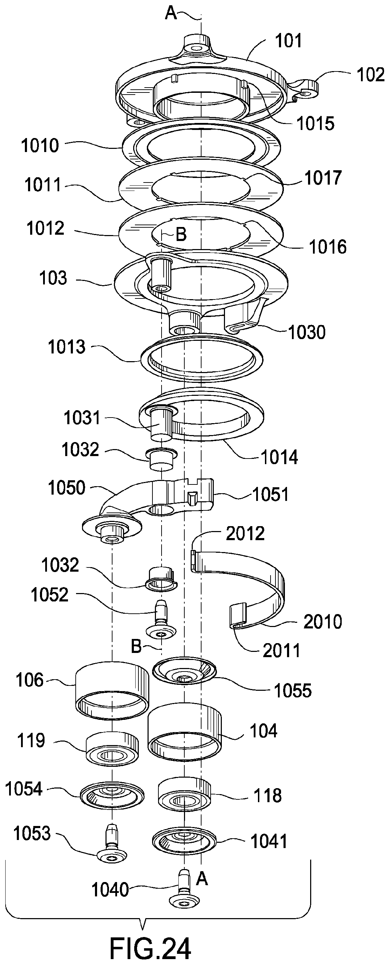

Figure 24 is an exploded view of the alternate embodiment in Figure 22. Bolt 1053 retains bearing 119 and pulley 106 on pivot arm 1050. Bolt 1040 retains bearing 118 and pulley 104 on carrier 103. Dust shield 1054 protects bearing 119. Dust shield 1041 protects bearing 118. Dust shield 1055 protects bearing 118. Pivot arm 1050 pivots about sleeve 1031 and bushings 1032, all retained to member 103 by bolt 1052. Axis B-B runs through bolt 1052. Bushing 1013 is disposed between retaining member 1014 and carrier 103.

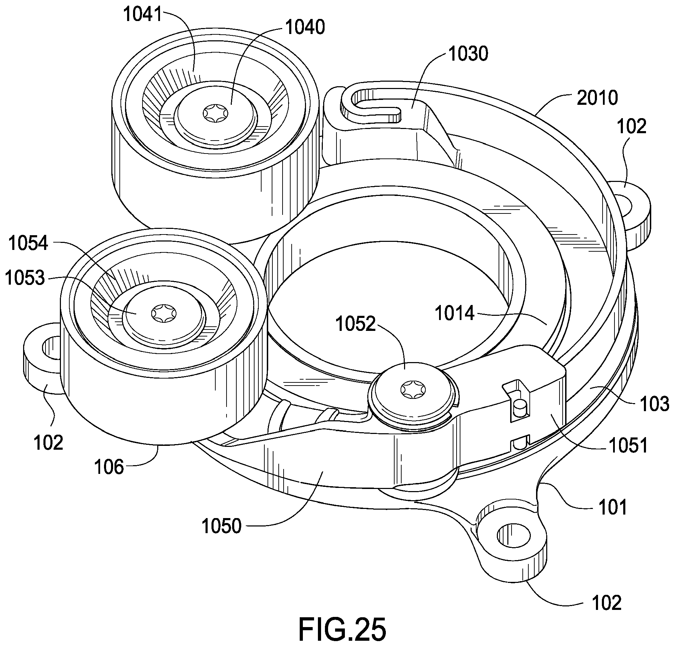

Figure 25 is a top perspective view of the embodiment in Figure 22. The view in Figure 25 is opposite handed from that in Figure 22 to illustrate the flexibility of the instant device which allows it to accommodate multiple alternator designs and engine layouts. Pivot arm 1050 is shown on the right side of the device in this Figure wherein pivot arm 1050 is shown on the left side of the device in Figure 22. The description and function of all components are the same for all embodiments and configurations except as otherwise indicated.

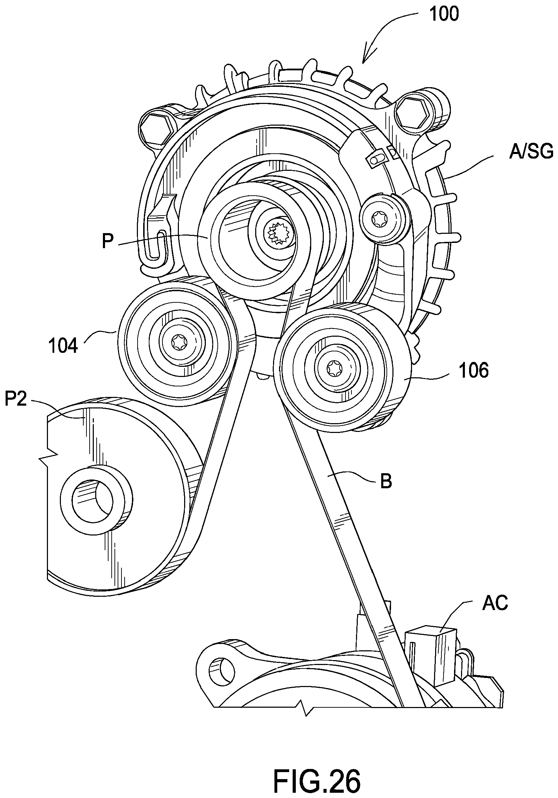

Figure 26 is a front view of the device on an engine. Tensioner 100 is mounted to the front of a starter-generator A/SG. A belt B is routed about a starter-generator pulley P. Belt B is also engaged between pulley 104 and pulley 106. Pulley 106 presses toward pulley 104 which loads belt B. The axis of rotation of pulley P aligns with axis A-A. Other accessories driven by belt B may be present on the engine including an air conditioning compressor AC. Pulley P2 may also be connected to an engine water pump. Belt B is driven by an engine crankshaft pulley (not shown). Starter-generator A/SG may also comprise an alternator for non-stop/start applications.

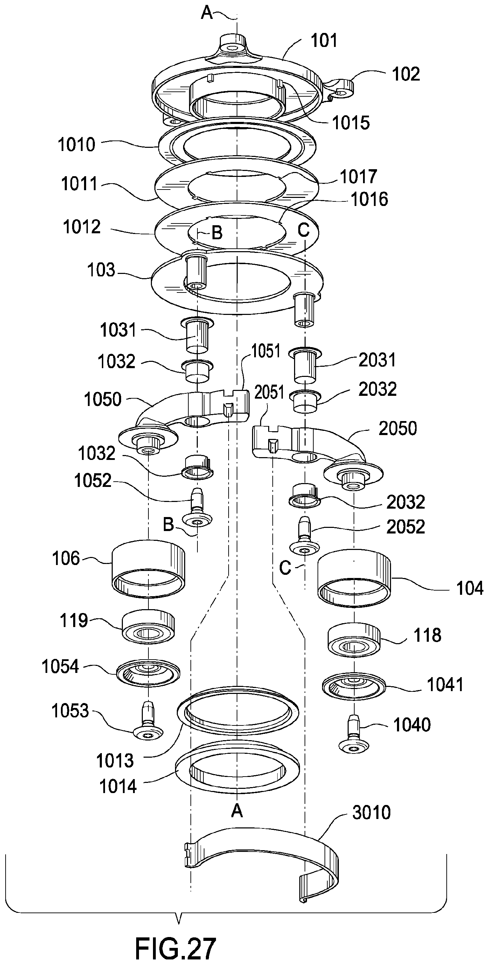

Figure 27 is an exploded view of an alternate embodiment. The components for this embodiment correspond to those as described in Figure 24 unless otherwise noted. Second pivot arm 2050 is pivotably mounted to carrier 103 by a bolt 2052. Pivot arm 2050 pivots about axis C-C on bushing 2031, 2032. Axis C-C is radially disposed from axis A-A. Pulley 104 is journalled to pivot arm 2050 by bearing 118. Spring 3010 is engaged between pivot arm 1050 and pivot arm 2050. Spring 3010 acts upon pivot arm 1050 and pivot arm 2050 thereby urging pulley 106 toward pulley 104, which in turn loads a belt, see Figure 26.

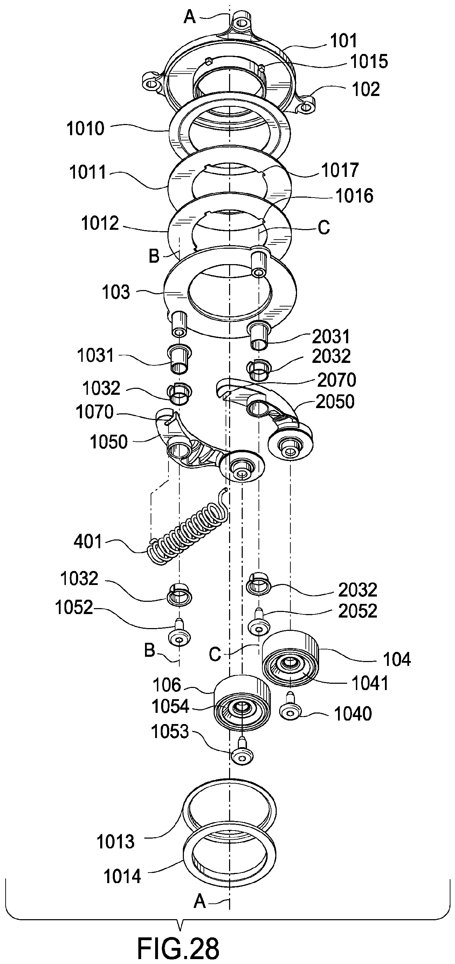

Figure 28 is an exploded view of an alternate embodiment. The components for this embodiment correspond to those as described in Figure 27 unless otherwise noted. Spring 401 is engaged between pivot arm 1050 and pivot arm 2050. Ends of spring 401 engages slot 1070 and slot 2070. Spring 401 acts upon pivot arm 1050 and pivot arm 2050 thereby urging pulley 106 toward pulley 104, which in turn loads a belt, see Figure 26. Spring 401 comprises a compression spring.

## Claims

1. A tensioner comprising:
a base (101);
a carrier (103) engaged with the base (101) and revolvable about an axis A-A;
the carrier (103) and the base (101) each describe an annular hole for receiving a driven pulley (P) with an axis of rotation coaxial with axis A-A;
a first pulley (104) journalled to the carrier (103);
and **characterized by**:
a first pivot arm (105) mounted to the carrier (103), the first pivot arm (105) pivotable about an axis B-B;
a second pulley (106) journalled to the first pivot arm (105);
the axis B-B is orbitally movable about axis A-A;
a first spring (110; 201) engaged between the carrier (103) and the first pivot arm (105); and
a damping mechanism (111) comprising an arcuate spring-loaded body (115) having a frictional material (114) pressed radially outward to frictionally engage with the carrier (103) to damp a carrier movement.

2. The tensioner as in claim 1, wherein the damping mechanism (111) is fixedly attached to the carrier.

3. The tensioner as in claim 1, wherein axis A-A is parallel to axis B-B.

4. The tensioner as in claim 1, wherein a rotational axis radius of the second pulley (106) is variable with respect to axis A-A.

5. The tensioner as in claim 4, wherein a rotational axis of the first pulley (104) is disposed at a constant radius from axis A-A.

6. The tensioner as in claim 1, wherein the first pulley (104) moves orbitally about axis A-A.

7. The tensioner as in claim 1 further comprising a second spring (201) engaged between the carrier (103) and the first pivot arm (105).

8. The tensioner as in claim 1 or 7, wherein the first spring (110) comprises a torsion spring.

9. The tensioner as in claim 1, wherein the frictional material (114) is fixed to the arcuate spring-loaded body (115) .

10. The tensioner as in claim 1, wherein a rotational axis of the first pulley (104) and a rotational axis of the second pulley (106) are both disposed within an outside diameter of the base (101).

11. The tensioner of claim 1, wherein:
the first pivot arm (1050) is pivotally mounted to the carrier (103) about the axis B-B; and further comprising:
a second pivot arm (2050) pivotally mounted to the carrier (103) about an axis C-C;
axis B-B is disposed a radial distance from axis A-A;
axis C-C is disposed a radial distance from axis A-A; wherein
the first spring (3010, 410) is engaged between the first pivot arm (1050) and the second pivot arm (2050) instead of between the first pivot arm and the carrier.

12. The tensioner as in claim 11, wherein the first spring comprises a compression spring (401).

13. The tensioner as in claim 1, wherein the first spring (201) comprises a partial single coil in the range of 180 degrees to 270 degrees between each end of the coil.

## Patentansprüche

1. Spannvorrichtung, umfassend:
eine Basis (101);
einen Träger (103), der mit der Basis (101) in Eingriff steht und um eine Achse A-A drehbar ist;
wobei der Träger (103) und die Basis (101) jeweils ein Ringloch zur Aufnahme einer angetriebenen Riemenscheibe (P) mit einer Drehachse koaxial zur Achse A-A bilden;
eine erste Riemenscheibe (104), die auf dem Träger (103) gelagert ist;
und **gekennzeichnet durch**:
einen ersten Schwenkarm (105), der am Träger (103) befestigt ist, wobei der erste Schwenkarm (105) um eine Achse B-B schwenkbar ist;
eine zweite Riemenscheibe (106), die auf dem ersten Schwenkarm (105) gelagert ist;
wobei die Achse B-B um die Achse A-A orbital beweglich ist;
eine erste Feder (110; 201), die zwischen dem Träger (103) und dem ersten Schwenkarm (105) in Eingriff steht; und
einen Dämpfungsmechanismus (111) mit einem bogenförmigen, federbelasteten Körper (115), der ein Reibungsmaterial (114) aufweist, das radial nach außen gedrückt ist, um mit dem Träger (103) in Reibungseingriff zu stehen, um eine Trägerbewegung zu dämpfen.

2. Spannvorrichtung nach Anspruch 1, wobei der Dämpfungsmechanismus (111) fest am Träger angebracht ist.

3. Spannvorrichtung nach Anspruch 1, wobei die Achse A-A parallel zur Achse B-B ist.

4. Spannvorrichtung nach Anspruch 1, wobei ein Drehachsenradius der zweiten Riemenscheibe (106) in Bezug auf die Achse A-A variabel ist.

5. Spannvorrichtung nach Anspruch 4, wobei eine Drehachse der ersten Riemenscheibe (104) in einem konstanten Radius von der Achse A-A angeordnet ist.

6. Spannvorrichtung nach Anspruch 1, wobei sich die erste Riemenscheibe (104) orbital um die Achse A-A bewegt.

7. Spannvorrichtung nach Anspruch 1, ferner umfassend eine zweite Feder (201), die zwischen dem Träger (103) und dem ersten Schwenkarm (105) in Eingriff steht.

8. Spannvorrichtung nach Anspruch 1 oder 7, wobei die erste Feder (110) eine Torsionsfeder umfasst.

9. Spannvorrichtung nach Anspruch 1, wobei das Reibungsmaterial (114) an dem bogenförmigen, federbelasteten Körper (115) befestigt ist.

10. Spannvorrichtung nach Anspruch 1, wobei eine Drehachse der ersten Riemenscheibe (104) und eine Drehachse der zweiten Riemenscheibe (106) beide innerhalb eines Außendurchmessers der Basis (101) angeordnet sind.

11. Spannvorrichtung nach Anspruch 1, wobei:
der erste Schwenkarm (1050) um die Achse B-B schwenkbar an dem Träger (103) angebracht ist; und ferner umfassend:
einen zweiten Schwenkarm (2050), der um eine Achse C-C schwenkbar am Träger (103) angebracht ist;
wobei die Achse B-B in einem radialen Abstand zur Achse A-A angeordnet ist;
wobei die Achse C-C in einem radialen Abstand zur Achse A-A angeordnet ist;
wobei
die erste Feder (3010, 410) zwischen dem ersten Schwenkarm (1050) und dem zweiten Schwenkarm (2050) statt zwischen dem ersten Schwenkarm und dem Träger in Eingriff steht.

12. Spannvorrichtung nach Anspruch 11, wobei die erste Feder eine Druckfeder (401) umfasst.

13. Spannvorrichtung nach Anspruch 1, wobei die erste Feder (201) eine einzelne Teilspule im Bereich von 180 Grad bis 270 Grad zwischen jedem Ende der Spule umfasst.

## Revendications

1. Tendeur comprenant :
une base (101) ;
un support (103) en prise avec la base (101) et pouvant tourner autour d'un axe A-A,
dans lequel le support (103) et la base (101) définissent chacun un trou annulaire pour recevoir une poulie réceptrice (P) ayant un axe de rotation coaxial avec l'axe A-A ;
une première poulie (104) tourillonnée au support (103), et **caractérisé en ce qu'**un premier bras pivotant (105) est monté sur le support (103), le premier bras pivotant (105) pouvant pivoter autour d'un axe B-B ;
une seconde poulie (106) tourillonnée au premier bras pivotant (105),
dans lequel l'axe B-B est mobile suivant une orbite autour de l'axe A-A ;
un premier ressort (110 ; 201) en prise entre le support (103) et le premier bras pivotant (105) ; et
un mécanisme d'amortissement (111) comprenant un corps arqué (115) à ressort comportant une garniture de friction (114) comprimée radialement vers l'extérieur pour entrer en prise par frottement avec le support (103) afin d'amortir un mouvement du support.

2. Tendeur selon la revendication 1, dans lequel le mécanisme d'amortissement (111) est fixé à demeure au support.

3. Tendeur selon la revendication 1, dans lequel l'axe A-A est parallèle à l'axe B-B.

4. Tendeur selon la revendication 1, dans lequel le rayon d'axe de rotation de la seconde poulie (106) est variable par rapport à l'axe A-A.

5. Tendeur selon la revendication 4, dans lequel l'axe de rotation de la première poulie (104) est disposé à un rayon constant de l'axe A-A.

6. Tendeur selon la revendication 1, dans lequel la première poulie (104) se déplace suivant une orbite autour de l'axe A-A.

7. Tendeur selon la revendication 1, comprenant en outre un second ressort (201) en prise entre le support (103) et le premier bras pivotant (105).

8. Tendeur selon la revendication 1 ou 7, dans lequel le premier ressort (110) comprend un ressort de torsion.

9. Tendeur selon la revendication 1, dans lequel la garniture de friction (114) est fixée au corps arqué (115) à ressort.

10. Tendeur selon la revendication 1, dans lequel l'axe de rotation de la première poulie (104) et l'axe de rotation de la seconde poulie (106) sont tous deux disposés à l'intérieur d'un diamètre extérieur de la base (101).

11. Tendeur selon la revendication 1, dans lequel :
le premier bras (1050) de pivot est monté pivotant sur le support (103) autour de l'axe B-B ; et comprenant en outre :
un second bras (2050) de pivot monté pivotant sur le support (103) autour d'un axe C-C,
dans lequel :
l'axe B-B est disposé à une distance radiale de l'axe A-A ;
l'axe C-C est disposé à une distance radiale de l'axe A-A,
dans lequel le premier ressort (3010, 410) est en prise entre le premier bras (1050) de pivot et le second bras (2050) de pivot au lieu que ce soit entre le premier bras de pivot et le support.

12. Tendeur selon la revendication 11, dans lequel le premier ressort comprend un ressort de compression (401).

13. Tendeur selon la revendication 1, dans lequel le premier ressort (201) comprend une seule spire partielle, l'écart angulaire entre les extrémités de la spire étant dans une fourchette allant de 180 degrés à 270 degrés.
